# EUROPEAN PATENT APPLICATION

(11) **EP 0 683 142 A1**
(43) Date of publication of application: **22.11.1995**
(21) Application number: 95107048.1
(22) Date of filing: 10.05.1995
(51) Int. Cl.: C04B 41/46

(54) **Process and product for protecting stone-made objects from weathering**

(30) Priority: 16.05.1994 IT MI940975
(71) Applicant: ISMES S.P.A., I-24124 Bergamo (IT); ENTE NAZIONALE PER L'ENERGIA ELETTRICA - (ENEL), I-00198 Roma (IT)
(72) Inventor: Cimitan, Lucio, I-32015 Puos D'Alpago (Belluno) (IT); Ravasio, Franco, I-24100 Bergamo (IT); Rossi, Pier Paolo, I-24100 Bergamo (IT)
(74) Representative: Lunati, Vittoriano

(57) **Abstract**

A process for protecting stone-made objects from weathering consists in applying an inhibitor substance to the surfaces of stone materials exposed to air, which substance is capable of preventing the occurrence of an oxydation reaction in the sulfur dioxide gas adsorbed by said stone-made objects. The product for implementing said process is a compound adapted to inhibit the oxydation reaction of sulfur dioxide and consisting of an aromatic organic compound selected from aromatic nitro-amino derivative compounds, in particular para-nitroaniline, and from aromatic heterocyclic compounds, in particular benzotriazole.

## Description

The present invention relates to a process and product for protecting stone-made objects from weathering.

It is known that present conditions in modern town centers, due to air pollution, greatly promote decay processes in stone materials, for example stone-made objects obtained from carbonate rocks, pyroclastic and sandstone rocks.

Actually, alteration of the monuments and historical buildings has recently undergone an important acceleration and has grown to a particularly evident degree.

Therefore, in recent years studies have become increasingly more developed for the purpose of setting up appropriate protective barriers capable of reducing the ruinous effects of the atmospheric pollution materialized by chemical and physical attacks to the stone materials.

In particular, protective agents have been prepared that, once applied to the stone-made surfaces, ideally should form continuous surface layers or films.

Just as an indication, silicone-based consolidation materials and fluoridated products are herein mentioned.

One of the most desired features for these protective agents is their duration in time, and therefore their capability to withstand attacks for a long time even in the most polluted environements, so that an expensive and laborious new application of same is not made necessary.

On the other hand, it is known that many tests, also at a distance from each other, should be carried out on the stone materials treated with the existing protective agents and exposed to different types of pollution in order to have an exhaustive indication of how the efficiency of said protective agents varies in time. In addition, these tests are in some cases destructive when it is necessary for example to pulverize the material under examination in order to be able to thoroughly examine the pollution effects.

This situation is a hindrance to a deep experimental evaluation of the efficiency of the protective agents in time.

However, given the importance of this experimental evaluation, the applicants have resorted to a particular technical solution consisting in setting up and using a sealed "climatic room" capable of housing different samples of stone materials treated with a protective agent and above all capable of accelerating the weathering processes of these materials by simulating both natural environmental conditions and a very marked atmospheric pollution.

In fact, appropriate equipment known per se is arranged in the climatic room, which equipment enables forced circulation of air therein, strong heating and cooling of same, strong variations in humidity and radiation, and a greatly increased dosage of the various polluants that may be present in the atmosphere.

By virtue of this climatic room, tests on the state of the samples of stone materials treated with a protective agent can give important results although they are repeated at a distance of days and weeks, instead of being repeated after years, and practically it is possible to evaluate the efficiency of the protective agents in time with tests executed over a period of some weaks.

Surprising results have come out of this experimentation: the resistance capability in time of known protective agents has proved to be unsatisfactory and after a relatively short period of time said protective agents have been distructed by the action of the polluted air.

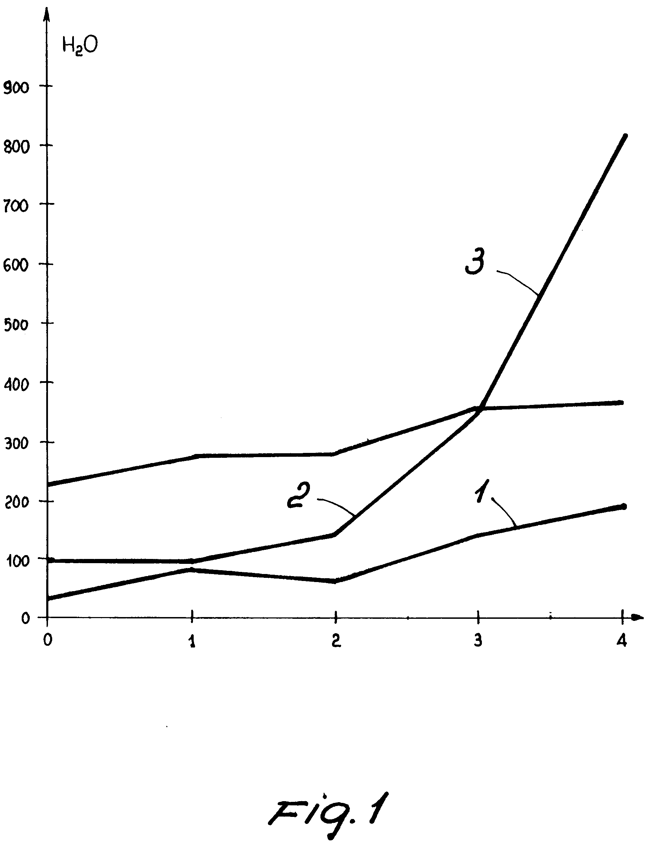

Shown in Fig. 1 accompanying the present application is the result of a behavior test in time of three stone samples of types widely used for monuments and buldings and sensitive to atmospheric pollution, i.e. a sandstone rock sample from Sarnico, a pyroclastic rock sample (tuff from Lazio) and a carbonate rock sample (calcarenite from Vicenza).

All these stone materials had been previously treated with one and the same protective agent: a silicone-based (and exactly siloxane-based) consolidation material which is a compound consisting of chains alternately formed of silica atoms and oxygen atoms.

The carried out test consisted in verifying the low-pressure water amount that can be absorbed by these materials after the same have been exposed to successive periods of one week's stay in the climatic room.

This test is indicative of how the protective agent withstands the environmental conditions artificially created in the climatic room, since it has, if integral, a hydrophobic function.

In Fig. 1, curve **1** relates to the sandstone rock, curve **2** relates to tuff, curve **3** to calcarenite. Reproduced in the y-axis is the amount of the absorbed water, expressed in grams, after the stone materials withdrawn from the climatic room have been brought into contact with low-pressure water over a period of 60 minutes. Reproduced in the x-asis is the stay time expressed in weeks, of the stone materials in the climatic room, before bringing said materials into contact with water.

The water absorption grows in time for all materials.

In addition, in all materials there is a first period of reduced access to water, showing the presence of a still efficient protective agent, followed by a second period of marked and growing sensitivity, showing loss of efficiency of the protective agent.

The phenomenon is well apparent in the case of calcarenite, a sedimentary carbonate rock mainly formed of calcium carbonate and having a medium particle size, i.e. grains of sizes included between 2 mm and 62 µ.

The loss of efficiency of the protective agent in time, by effect of chemical attacks by the polluted air, means that after a relatively small number of years all applications of silicone-based consolidation material to buildings and monuments made of calcarenite must be repeated and that usually known protective agents have a short duration.

Under this situation the technical task underlying the present invention is to devise a process and a product capable of substantially reducing the above mentioned drawbacks, and specifically capable of protecting stone-made articles and in particular those stone-made articles which are very sensitive to corrosion, from weathering due to atmospheric pollution, for a long time and in an efficient manner.

The technical task mentioned is substantially achieved by a process and a product for protecting stone-made articles from weathering, as claimed in the annexed claims 1 and 3.

A detailed description of the invention is now given by way of non-limiting example, with reference to the accompanying drawings, in which:
**Figure 1**, already mentioned in the preamble, shows, by way of example, how the absorption of low-pressure water varies in stone samples of three different types of materials previously treated with a known protective agent;
**Figure 2** shows, by way of example, how sulfation of a powder sample of calcium carbonate varies in time in the absence of previous treatments and in the case of a previous treatment with a compound of the invention;
**Figure 3** shows, by way of example, how sulfation of a powder sample of calcium carbonate varies in time in the absence of previous treatments and in the case of previous treatment with another compound of the invention;
**Figure 4** shows, by way of example, how sulfation of a stone (calcarenite) sample varies in time when it is treated with a known protective agent and when it is treated with a compound according to the invention; and
**Figure 5** shows, by way of example, how absorption of low-pressure water varies in time in a stone (calcarenite) sample when it is treated with a known protective agent and when it is treated with a compound of the invention.

The stone materials withdrawn from said climatic room on the occasion of the test referred to in Fig. 1, have been thoroughly examined.

From said examination it came out that on the surface of the various stone materials many gypsum crystals were present together with remainders of the initially applied protective agent

Then it was surprisingly hypothesized that the breaking action of the protective film was not due to an attack from the outside, but it was due to the formation of gypsum crystals from the inside, between the stone surface and the protective film.

Said crystals would have given rise by their growing, to a breaking action of the protective film, thereby raising it.

This hypothesis is consistent with the fact that the phenomenon of loss of efficiency of the protective film is particularly emphasized on calcarenite, a stone mainly formed of calcium carbonate (CaCO₄).

In fact, gypsum is a calcium sulfate dihydrate (CaSO₄+2H₂O) and the same can be formed in a wet environment starting from calcium carbonate and sulfur dioxide gas (SO₂), which is capable of passing through the protective film and coming into contact with the stone surface.

It is to be pointed out that sulfur dioxide gas is widely present in the atmospheric pollution, and is at the basis of that series of phenomena that are commonly defined as acid rain or mist.

Then the sulfation development on powder samples of calcium carbonate in said climatic room was verified.

These samples have the same composition as calcarenite, except for the presence of impurities in the latter, and by their very high specific surface they can greatly promote all phenomena taking place on the surface.

Air with the addition of sulfur dioxide was admitted to the climatic room and oxydation of same was obtained by catalysis in particular by a source of UV radiation and small amounts of nitrogen dioxide.

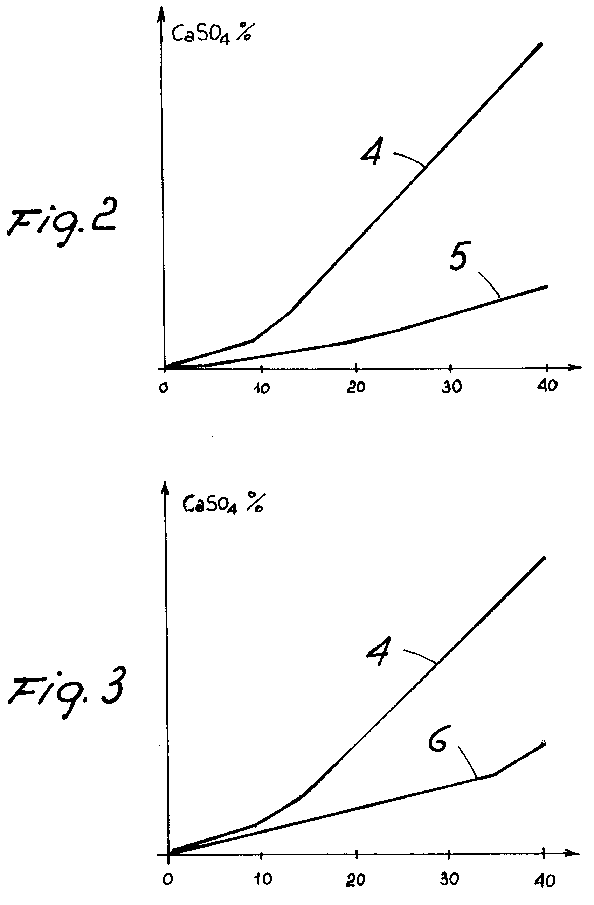

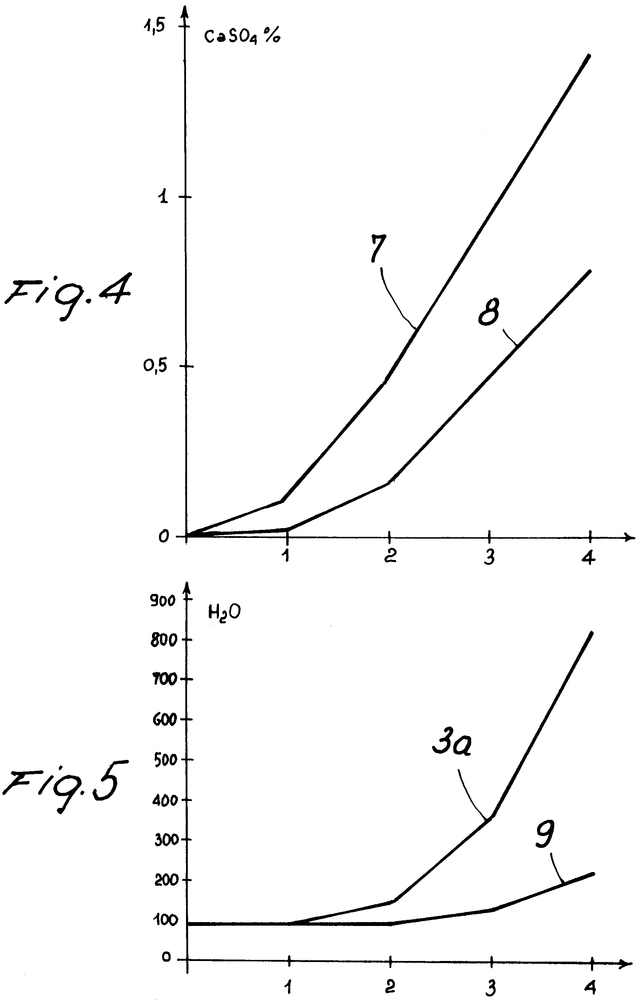

The result of this examination extended over a period of forty days is shown in Figs. 2 and 3, by curves denoted by **4**: there is a first period in which the calcium sulfate formation process develops very slowly, and a second period in which sulfation undergoes a strong acceleration.

Practically, the calcium sulfate amount in the powder samples of calcium carbonate grows over time in substantially the same manner as the development of curves 1, 2 and above all 3 in Fig. 1: after an "induction period" in which the process grows slowly, sulfation undergoes a sharp acceleration.

The hypothesis that the destruction of the protective film is due to gypsum crystals appears therefore confirmed, as well as the hypothesis that this destruction results from the fact that the atmospheric sulfur dioxide penetrates the protective film and that the surface of the stone material located underneath said protective film is sulfated.

Under this situation, the following process has been originally devised for protecting stone-made objects.

First of all, a direct intervention on the formation process of gypsum crystals has been devised, instead of, for example, making the existing protective films as much impervious to sulfur dioxide as possible.

Secondly, it has been devised of intervening immediately on the reactions leading to the formation of calcium sulfate on the stone material surface, instead of intervening on the final chemical reactions leading to gypsum formation.

More particularly, it has been Originally conceived of preventing the very first chemical reaction, that is oxydation of the sulfur dioxide adsorbed by stone materials.

Therefore the process of the invention consists in applying an inhibitor substance to the surfaces of the stone materials exposed to air, that is a substance which is capable of retarding, stopping or poisoning the formation of calcium sulfate, in that it immediately inhibits the oxydation reaction of the sulfur dioxide gas filtered through the conventional protective films and adsorbed by stone-made objects.

This application is carried out directly on the stone, which means that an inhibitor substance in the form of a solution is applied to the stone surface before the additional possible application thereto of a protective agent of known type.

This process interferes at the roots with the cause which seems to be the fundamental one in the case of loss of efficiency of the protective agents in time.

In order to carry said process into effect, a product or compound is used which inhibits the oxydation reaction of sulfur dioxide.

This inhibitor compound is an aromatic organic compound selected from the aromatic nitro-amino derivative compounds and aromatic heterocyclic compounds.

The aromatic nitro-amino derivative compounds are characterized by the presence of nitro-groups (-NO₂) and amino-groups (-NH₂) directly bound to aromatic or benzene rings (C₆H₆) by substitution of the hydrogen atoms thereof. Of these compounds, according to the invention, para-nitroaniline is the preferred one, in which a nitro-group and an amino-group are opposite to each other: 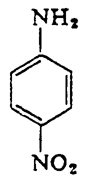
The heterocyclic compounds are organic compounds characterized by the fact that they contain cyclic systems or rings in which heteroatoms (that is non-carbon atoms) are also present, bound to the other atoms of the ring by covalent bonds.

They can be tria-, thetra-, penta-, hexatomic in dependence of the number of atoms forming the rings.

The aromatic heterocyclic compounds have the heterocyclic atoms, with heteroatoms, condensed with aromatic or benzene rings.

Of the aromatic heterocyclic compounds, the preferred one is benzotriazole, comprising one benzene ring and one heterocyclic pentatomic ring, the latter with three heteroatoms consisting of nitrogen: 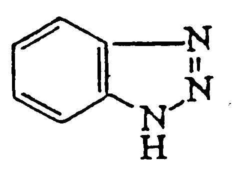
The efficiency of said compounds in inhibiting sulfation is proved by the results shown by curves **5** and **6** in Figs. 2 and 3.

These results concern tests carried out (following the same modalities as pointed out with reference to curves 4) on powder samples of calcium carbonate previously treated with para-nitroaniline (curve **5** in Fig. 2) and on powder samples of calcium carbonate previously treated with benzotriazole (curve **6**).

It is pointed out that in both curves 5 and 6 the "sulfation induction period" undergoes a sharp extension and that even after this period the samples treated with the inhibitor compound undergo a reduced solfation corresponding to about 30% relative to solfation of the untreated samples.

The efficiency of said sulfation-inhibiting compounds has been tested, still in the climatic room, on calcarenite stone samples.

Fig. 4 shows how the formation of calcium sulfate has developed on a calcarenite stone treated with said known silicone-based protective agent (curve **7**) and, alternatively, on the calcarenite stone treated with para-nitroaniline alone (curve **8**).

It appears that the sulfation-inhibiting compound is much more efficient, even if used on its own, than said known protective agent in reducing the formation of calcium sulfate.

Finally, the series of tests has been completed with a further test referred to in Fig. 5.

This test is similar to that described in the preamble, in connection with Fig. 1: verification of the amount of low-pressure water that can be adsorbed over a period of 60 minutes by a calcarenite stone after the same has been exposed to successive periods of one week's stay in the climatic room.

Curve **3**a is similar to curve **3** in Fig. 1 and shows the behavior in time of samples of calcarenite stone previously treated with a known silicone-based protective agent, whereas curve **9** shows the behavior of samples of calcarenite stone exclusively treated with an inhibitor compound according to the invention, in particular para-nitroaniline. This test shows how the protective agent and inhibitor compound withstand the environmental conditions artificially created in the climatic room because they both have, if integer, a hydrophobic function.

It is well apparent that the inhibitor compound keeps much more integer in time, since after a four weeks' stay in the climatic room, in the presence of very severe environmental conditions in terms of polluting levels, it is still efficient in preventing penetration of low-pressure water.

The invention achieves important advantages.

In fact, said process cope at the roots with the main problems of weathering in stone materials exposed to atmospheric pollution, and the selected compounds, para-nitroaniline and benzotriazole in particular, appear to be completely satisfactory as regards their capability of inhibiting the oxydation reaction of sulfur dioxide on the stone material surface.

## Claims

1. A process for protecting stone-made objets from weathering, characterized in that it consists in applying an inhibitor to the surfaces of stone materials exposed to air, which inhibitor is capable of at least retarding the formation of calcium sulfate on said surfaces.

2. The process as claimed in claim 1, wherein applied to the surfaces of said stone materials exposed to air, is an inhibitor substance for inhibiting the oxydation reaction of the sulfur dioxide gas adsorbed by said stone-made objects, so as to poison the formation of calcium sulfate on said surfaces.

3. A product for protecting stone-made objects from weathering, characterized in that it comprises a compound adapted to inhibit the oxydation reaction of sulfur dioxide.

4. The product as claimed in claim 3, comprising an aromatic organic compound selected from aromatic nitro-amino derivative compounds and aromatic heterocyclic compounds.

5. The product as claimed in claim 4, wherein from the group of said aromatic nitro-amino derivative compounds, para-nitroaniline is selected.

6. The product as claimed in claim 4, wherein from the group of said aromatic heterocyclic compounds, benzotriazole is selected.

7. The product as claimed in claim 4, consisting of a solution containing an aromatic organic compound selected between para-nitroaniline and benzotriazole.
